(19) Europäisches Patentamt
European Patent Office
Office européen des brevets

(11) Veröffentlichungsnummer: **0 254 984 B1**

(12) **EUROPÄISCHE PATENTSCHRIFT**

(45) Veröffentlichungstag der Patentschrift: **12.06.91**

(51) Int. Cl.⁵: **A01C 5/06, A01B 63/114**

(21) Anmeldenummer: **87110328.9**

(22) Anmeldetag: **17.07.87**

(54) **Verfahren und Vorrichtung zur Bestimmung der Arbeitstiefe von Säscharen von Drillmaschinen.**

(30) Priorität: **25.07.86 DE 3625122**

(43) Veröffentlichungstag der Anmeldung:
**03.02.88 Patentblatt 88/05**

(45) Bekanntmachung des Hinweises auf die
Patenterteilung:
**12.06.91 Patentblatt 91/24**

(84) Benannte Vertragsstaaten:
**AT DE FR GB IT NL**

(56) Entgegenhaltungen:
**EP-A- 0 171 719**
**EP-A- 0 177 024**
**DE-C- 3 237 538**

**PATENT ABSTRACTS OF JAPAN, Band 6, Nr.**
**245 (P-159)[1123], 3. Dezember 1982; & JP-**
**A-57 142 514 (HITACHI SEISAKUSHO K.K.)**
**03-09-1982**

(73) Patentinhaber: **Amazonen-Werke H. Dreyer**
**GmbH & Co. KG**
**Am Amazonenwerk 9-13**
**W-4507 Hasbergen-Gaste(DE)**

(72) Erfinder: **Mix, Arthur**
**Gerhard-Hauptmannweg 15**
**W-2872 Hude i.O.(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung betrifft ein Verfahren zur Bestimmnung der Arbeitstiefe von Säscharen von Drillmaschinen gemäß des Oberbegriffes des Patentanspruches 1.

Ein derartiges Verfahren ist aus der DE-OS 34 36 601 bereits bekannt. Hier wird durch Mittelwertbildung ein für das Bodenprofil charakteristischer Wert ermittelt und nach diesem Wert wird die Ablagetiefe gesteuert. Vor allem auf sehr grob klutigen Böden hat es sich gezeigt, daß dieses bekannte Verfahren nicht immer zu ganz korrekten Ablagetiefe des Saatgutes führt. Dieses ist auf die zeitverzögerte Nachregelung des Schardruckes zurückzuführen. Es kann also erst nachgestellt werden, wenn das Säschar bereits längst "das Ereignis" passiert hat.

Der Erfindung liegt daher die Aufgabe zugrunde, ein Verfahren der eingangs genannten Art derart weiterzubilden, daß auch unter schwierigsten Bedingungen die Saatkörner immer in der richtigen Tiefe im Boden abgelegt werden.

Diese Aufgabe wird erfindungsgemäß durch das Kennzeichen des Patentanspruches 1 gelöst. Das erfindungsgemäße Verfahren erfaßt gemäß diesen Merkmalen das Bodenprofil und berücksichtigt Extremwerte bei der Mittelwertbildung nicht, so daß eine äußerst gleichmäßige Ablagetiefe in der gewünschten Weise erhalten wird. Durch die Ausfilterung der Extremwerte ergibt sich ein sehr ruhig arbeitender Regelkreis und ein ruhiger Lauf der Säschare, da nicht auf diese Extremwerte reagiert wird. Dadurch, daß diese Extremwerte ausgefiltert werden, besteht nicht die Gefahr, daß die Säschare, die relativ träge ihre Ablagetriefe ändern, das Saatgut weder zu tief vergraben noch zu flach ablegen. Durch die Ausfilterung der extrem großen Kluten bzw. extrem tiefen Zwischenbereiche zwischen den einzelnen Kluten ist sichergestellt, daß der ermittelte Wert praktisch der tatsächlich über dem Saatgut liegenden Bodenschicht entspricht. Hierbei wird vor allem auch mit berücksichtigt, daß extrem große Kluten nicht derartig gleichmäßig zerfallen, da eine ideal eingeebnete Bodenoberschicht bei extrem klutigen Böden nicht entstehen kann.

Bei einer vorteilhaften Durchführung des Verfahrens ist erfindungsgemäß vorgesehen, daß die aufgrund extremer Höhen und extremer Tiefen der Bodenoberfläche reflektierten Ultraschallwellen bzw. deren elektrische Signale bei der Mittelwertbildung unberücksichtigt bleiben. Durch diese Maßnahme wird ein Mittelwert gebildet, der den extrem klutigen Böden entgegenkommt. Des weiteren ist hierdurch sichergestellt, daß der Mittelwert, der dem Bodenprofil entspricht, das tatsächliche Bodenprofil in nicht ganz geglätteter Weise wiedergibt.

Die Erfindung wird im folgenden anhand eines Ausführungsbeispieles weiter erläutert und beschrieben es zeigt

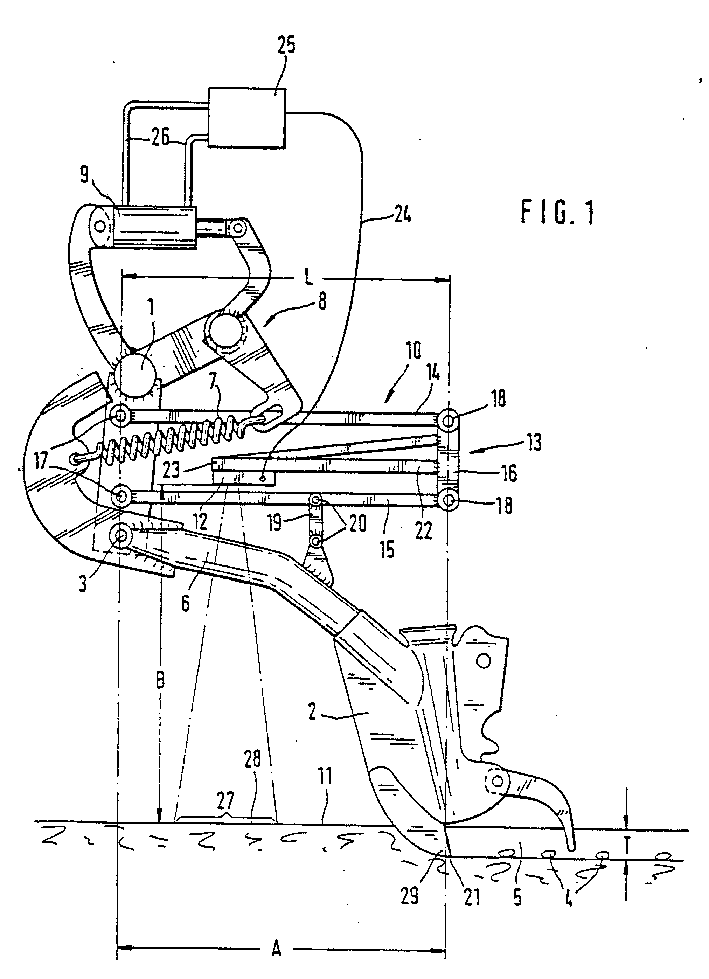

Fig. 1  ein an einer Sämaschine angeordnetes Säschar in der Seitenansicht und

Fig. 2  ein Diagramm zur Erläuterung des erfindungsgemäßen Verfahrens.

An dem Rahmen 1 der Drillmaschine sind die Säschare 2, von denen nur eines dargestellt ist, jeweils mit Hilfe des Gelenkes 3 in aufrechter Ebene höhenverschwenkbar angeordnet. Den Säscharen 3 werden in bekannter und daher nicht dargestellter Weise die auszubringenden Saatkörner 4 in einstellbaren Mengen über Dosierorgane zugeführt. Die Saatkörner 4 werden jeweils in den von den Säscharen 2 erzeugten Säfurchen 5 abgelegt. Zwischen den Haltearmen 6 und den Säscharen 2 und dem Rahmen 1 der Drillmaschine sind jeweils die Schardruckfedern 7 angeordnet, deren Spannung über die zentrale Einstellvorrichtung 8 mit Hilfe des Hydraulikzylinders 9 zu verändern ist.

An der Drillmaschine ist in dem Bereich eines Säschares 2 die Tasteinrichtung 10 angeordnet, mit der die Eindringtiefe T, die auch als Tiefgang bezeichnet wird, des Säschares 2 in den Boden 11 zu erfassen ist. Die Tasteinrichtung 11 besteht im wesentlichen aus dem Ultraschallsensor 12 mit einer entsprechenden Auswerteschaltung. Der Ultraschallsensor 12 ist an der parallelogrammartigen Halterung 13 angeordnet. Die parallelogrammartige Halterung 13 weist die beiden übereinanderliegenden Arme 14 und 15 und die dem Rahmen 1 gegenüberliegende aufrechte Strebe 16 auf. Die Arme 14 und 15 sind mit ihren Vorderseiten mit Hilfe der Gelenke 17 an dem Rahmen 1 angelenkt. Die hinteren Enden der Arme 14 und 15 sind mit einer aufrechten Strebe 16 mit Hilfe der Gelenke 18 miteinander verbunden. Zwischen dem unteren Arm 15 und der parallelogrammartigen Halterung 13 und dem Haltearm 6 des Säschares 2 ist die Stange 19 mittels der Gelenke 20 angeordnet. Die Stange 19 ist mit den Gelenken 20 derart angebracht, daß der untere Arm 15 der parallelogrammartigen Halterung 13, der Haltearm 6 und die Stange 19 ein Parallelogramm bilden. Über die Stange 19 ist die parallelogrammartige Halterung 13 mit dem Säschar 2 verbunden, so daß die Arme 14 und 15 und die Strebe 16 eine dem Säschar 2 entsprechende Auf-und Abbewegung ausführen, wenn sich das Säschar 2 auf- und abbewegt. Die Arme 14 und 15 weisen die Länge L auf, die den waagerechten Abstand A zwischen dem von dem Gelenk 3 gebildeten Drehpunkt des Säschares 2 und dem Aufstandspunkt 21 des Säschares 2 in dem Boden 11 entspricht. Hierdurch führt die Strebe 16 die gleichgroße Bewegung wie das Säschar 2 im Boden 11 aus.

An der dem Rahmen 1 gegenüberliegenden aufrechten Strebe 16 ist die Sensorstrebe 22 angeschweißt, wobei sich das vordere Ende 23 der Sensorstrebe 22 in der Draufsicht gesehen seitlich der Arme 14 und 15 befindet. An dem vorderen Ende 23 der Sensorstrebe 22 ist der Ultraschallsensor 12 befestigt. Der Ultraschallsensor 12 befindet sich ebenfalls in der Draufsicht gesehen seit-lich des Armes 15. Der Ultraschallsensor 12 ist über das Kabel 24 mit dem Mikroprozessor, der die Auswerteschaltung beinhaltet, und sich in dem Schaltkasten 25 befindet, verbunden. Der Mikroprozessor ist wiederum mit der ebenfalls in dem Schaltkasten 25 sich befindenen Steuerschaltung verbunden, die den Hydraulikzylinder 9 über die Schläuche 26 und somit die Einstellvorrichtung 8 steuert, so daß die Spannung der Schardruckfedern 7 verändert wird.

Die Anordnung des Ultraschallsensors 12 ist so gewählt, daß er in einem von dem Säschar 2 noch nicht bearbeiteten Bereich arbeitet, so daß die von dem Ultraschallsensor 12 ausgesandten Schwingungswellen in diesem Bereich auf dem Boden auftreffen. Der Ultraschallsensor 12 sendet in dem durch die strichpunktierten Linien angedeuteten Bereich 27 Schwingungswellen aus, und empfängt die Schwingungswellen wieder, wenn sie von der Bodenoberfläche 28 reflektiert zurückkommen. Hieraus errechnet die dem Ultraschallsensor zugeordnete Auswerteschaltung in einer noch zu erläuternden Weise jeweils den Abstand B des Ultraschallsensors 12 zur Bodenoberfläche.

Die Auswerteschaltung des Ultraschallsensors 12 bzw. der in dem Schaltkasten 25 angeordnete Mikroprozessor werden auf die Nullstellung geeicht, wenn die Scharspitze 29 auf der Bodenoberfläche 28 aufsteht; d.h., daß sich die Scharspitze 29 dann auf gleicher Höhe mit der Bodenoberfläche 39 befindet. Dringt nun das Säschar 2 mit der Scharspitze 29 in den Boden 11 ein, um die Säfurche 5 in den Boden 11 zu ziehen, ermittelt die Auswerteschaltung bzw. der Mikroprozessor über den Ultraschallsensor 12 in der noch zu erläuternden Weise den Tiefgang T des Säschares 2 durch den Boden 11. Über die Tastatur des Schaltkastens 25 wird der Abtasteinrichtung 10 der gewünschte Tiefgang T des Säschares 2 und somit die Sollablagetiefe der Saatkörner 4 in den Boden 11 vorgegeben. Weichen nun die von dem Ultraschallsensor 12 ermittelten Werte von dem vorgesehenen Tiefgangssollwert ab, so wird über den Mikroprozessor und der Steuerschaltung, die sich beide in dem Schaltkasten 25 befinden, der Hydraulikzylinder 9 betätigt, so daß die Spannung der Schardruckfedern 7 entsprechend verändert wird. Die Spannung der Schardruckfedern 7 wird vergrößert, wenn der Tiefgang T der Säschare 2 zu gering ist, so daß die Säschare 2 mit einer größeren Kraft, die von den Schardruckfedern 7 erzeugt wird, in den Boden 11 gedrückt werden. Die Spannung der Schardruckfedern 10 wird verringert, wenn der Tiefgang T der Säschare 2 groß ist, so daß aufgrund der geringen Spannung der Schardruckfedern 7 die Säschare 2 durch den Bodenwiderstand etwas angehoben werden. Somit wird praktisch ein konstanter Tiefgang T der Säschare 2 durch den Boden erreicht, so daß die Saatkörner 4 in gleichmäßiger Weise in den Boden abgelegt werden können.

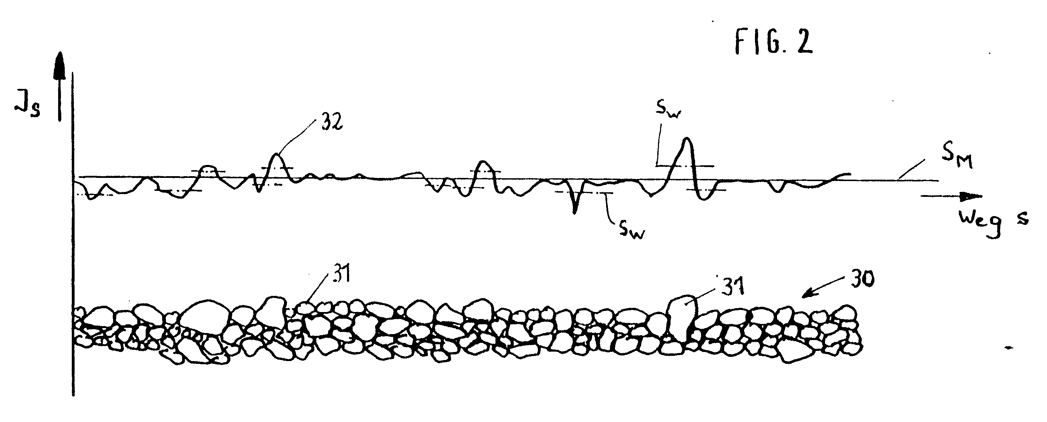

In Fig. 2 ist in einem Diagramm beispielhaft das Bodenprofil 30 in Seitenansicht aufgezeichnet. Dieses Bodenprofil wird von der Oberfläche der verschiedenen Kluten 31 gebildet, die eine unterschiedliche Klutengröße aufweisen. Oberhalb des Bodenprofils 30 ist die Kurve der Intensität $I_S$ der von dem Ultraschallsensor 12 ausgesandten und reflektierenten Welle gegenüber dem Weg S aufgetragen. In diesem Weg bzw. Zeitintervall empfängt der Ultraschallsensor 12, wie dargestellt, die die Signalkurve 32 ergebenen Signale und gibt sie an den Mikroprozessor bzw. die Auswerteschaltung ab. Die Auswertung kann nun so erfolgen, daß im Mikroprozessor die Signale alle aufsummiert werden und dann ein Mittelwert $S_M$ gebildet wird, den man auch erhalten würde, wenn der mit den Kluten 31 bedeckte Boden vollständig eingeebnet wäre, wobei jedoch die extrem erhöhten bzw. großen Kluten sowie die extrem tiefen Zwischenbereiche zwischen den einzelnen Kluten bei der Mittelwertbildung nicht berücksichtigt sind. Diese oberhalb der mit strichpunktierten Linien eingezeichneten Schwellwerte $S_W$ werden bei der Mittelwertbildung, die für das Bodenprofil den charakteristischen Wert bildet, von der Auswerteschaltung ausgefiltert. Der Schwellwert $S_W$ kann entweder vorgegeben werden oder aber von dem Mikroprozessor entsprechend der Rauhigkeit der Bodenoberfläche oder Klutengröße selbst gewählt werden.

Somit bleiben also bei der Ermittlung des Mittelwertes für den charakteristischen Wert des Bodenprofils die aufgrund extremer Höhen und extremen Tiefen der Bodenoberflächen refelktierten Ultraschallwellen bzw. deren elektrische Signale bei der Mittelwertbildung im Mikroprozessor unberücksichtigt.

Im Mikroprozessor kann eine Schaltung verwendet werden, die in der Lage ist, die einzelnen Signalstärken $I_S$ zu speichern und die aufgrund extrem großer Kluten bzw. extrem großer Tiefen den Schwellwert $S_W$ überschreitenden Signalstärke $I_S$ auszufiltern und so den charakteristischen Wert $S_M$ zu ermitteln. Auf diese Weise wird eine Maß dafür erhalten, wie stark die Extremwerte um den charakteristischen Wert $S_M$ streuen. Dies ist gleichzeitig ein Maß für die Rauhigkeit der Bodenoberfläche, wobei extrem große Kluten bzw. extrem große Höhen und Tiefen über eine sehr kleine Wegstrek-ke unberücksichtigt bleiben. In Abhängigkeit von dem charakterischtischen Wert $S_M$ wird dann über den Mikroprozessor und der Streuerschaltung die Einstellvorrichtung 8 gesteuert.

## Ansprüche

1. Verfahren zur Bestimmung der Arbeitstiefe von Säscharen von Drillmaschinen, bei dem eine Abtrasteinrichtung(12) die Bodenoberfläche abtastet und entsprechende elektrische Signale erzeugt, die in einer Auswerteschaltung (25) derart ausgewertet werden, daß aus den Signalen ein die auf der Bodenoberfläche liegenden Kluten berücksichtigender, für das Bodenprofil charakteristischer Wert ermittelt wird, der einem Wert entspricht, den man bei der Abtastung einer ideal eingeebneten Bodenoberfläche erhalten würde, wobei der charakteristische Wert unter Zugrundelegung der in einem bestimmten Zeit- oder Wegintervall erfaßten Signale der Abtasteinrichtung und durch Aufsummierung und anschließender Mittelwertbildung der in Intervallen erfaßten Signale ermittelt wird, und wobei in Abhängigkeit dieses charakteristischen Wertes die Arbeitstiefe unter Berücksichtigung eines vorgegebenen Tiefgangwertes (T) bestimmt wird,
dadurch **gekennzeichnet**,
daß von den innerhalb der bestimmten Zeit- oder Wegintervalle gemessenen Signale die oberhalb und unterhalb vorgebbarer Schwellwerte ($S_W$) liegenden Signale ausgefiltert werden, so daß sie bei der Mittelwertbildung ($S_M$) unberücksichtigt bleiben.

## Claims

1. A method of determining the working depth of sowing coulters of seed drills, in which a sensor device (12) scans the soil surface and generates corresponding electrical signals which are evaluated in an evaluation circuit (25) in such a way that a value characteristic for the soil is ascertained from the signals, said characteristic value taking into account clods lying on the soil surface, and corresponding to a value which would be obtained by scanning an ideally-smoothed soil surface, said characteristic value being determined on the basis of signals detected by the sensor device over a specific interval of time or distance, and by totalling and subsequent mean value formation of the signals detected at intervals, and the working depth being determined in dependence on this characteristic value, taking into account a preselected draught value (T), characterised in that signals measured within the specific time or distance intervals which lie above and below preselectable threshold values ($S_W$) are filtered out, so that they are not taken into account in the formation of mean values.

## Revendications

1. Procédé pour déterminer la profondeur de travail des socs d'un semoir, selon lequel un dispositif de détection (12) détecte la surface supérieure du sol et crée des signaux électriques correspondants fournis à un circuit d'exploitation (25) pour être exploités, en ce qu'à partir des signaux on détermine une valeur caractéristique du profil du sol qui tient compte des mottes reposant à la surface supérieure du sol, cette valeur caractéristique correspondant à une valeur que l'on obtiendrait par la détection d'une surface de sol aplanie de manière idéale, la valeur caractéristique étant déterminée en utilisant les signaux du dispositif de détection, détectés dans un intervalle de temps ou pour une course déterminés, ces valeurs s'obtenant par l'addition suivie d'une formation de moyenne des signaux détectés dans les intervalles, et en fonction de cette valeur caractéristique, on détermine la profondeur de travail en tenant compte d'une profondeur (T) prédéterminée, procédé caractérisé en ce que parmi les signaux mesurés dans un intervalle de temps ou sur un parcours donnés, on sépare par filtrage les signaux situés au-dessus et en-dessous d'un seuil prédéterminé ($S_W$) pour ne pas les prendre en compte lorsqu'on forme la valeur moyenne ($S_M$).

EP 0 254 984 B1

F I G. 1

FIG. 2